Europäisches Patentamt

European Patent Office

Office européen des brevets

(11) Publication number: **0 062 525**
**B1**

## EUROPEAN PATENT SPECIFICATION

(45) Date of publication of patent specification: **20.08.86**

(21) Application number: **82301783.5**

(22) Date of filing: **05.04.82**

(51) Int. Cl.⁴: **B 29 C 53/04,** H 01 M 2/18,
H 01 M 10/12

(54) Method and apparatus for fabricating battery plate envelopes.

(30) Priority: **03.04.81 US 250892**

(43) Date of publication of application:
**13.10.82 Bulletin 82/41**

(45) Publication of the grant of the patent:
**20.08.86 Bulletin 86/34**

(84) Designated Contracting States:
**AT BE CH DE FR GB IT LI LU NL SE**

(56) References cited:
**GB-A-1 497 364**
**US-A-3 900 341**
**US-A-4 026 000**
**US-A-4 063 978**
**US-A-4 080 727**
**US-A-4 125 424**

(73) Proprietor: **TEKMAX INC.**
**P.O. Box 1692**
**Corvallis Oregon 97330 (US)**

(72) Inventor: **Johnson, Peter E.**
**500 Crescent Valley Drive**
**Corvallis Oregon 97330 (US)**

(74) Representative: **Skerrett, John Norton Haigh**
**et al**
**H.N. & W.S. SKERRETT Rutland House 148**
**Edmund Street**
**Birmingham B3 2LQ (GB)**

Courier Press, Leamington Spa, England.

## Description

The invention relates to the fabrication of battery plate envelopes. More particularly, the invention relates to a method and apparatus for fabricating battery plate envelopes from a sheet of microporous material.

In a wet cell storage battery, it is often desirable to enclose either the positive or the negative battery plates within an envelope. The envelopes serve two distinct purposes. First, the envelopes insulate the oppositely charged plates. Second, the envelopes prevent material from falling to the bottom of the battery case as can happen in conventional batteries utilizing sheet-type separators. Such material accumulating in the bottom of the battery case eventually causes shorts to develop, and the life of the battery may be shortened. By collecting the material within an envelope, this problem is avoided. The envelopes also enable the battery to be somewhat smaller, since space normally provided between the plates for accumulation of such loose material may be eliminated.

The precise material used for the separator envelopes varies, but it normally has some type of rib structure for holding most of the envelope area away from the plate, and it must be porous enough so that the acid and the ions can migrate in and out of the envelope, and from plate to plate. Typical envelopes are discussed in detail in U.S. Patent No. 3,351,495 to Larson et al. Normally, very high molecular weight polyolefins are utilized in conjunction with an inert filler material plus an oil.

Although these envelope-type battery plate separators have been used in the past, particularly in the so-called "maintenance free" batteries, the separator envelopes have not been fabricated or mounted onto the battery plates in as efficient and expeditious manner as that achieved by the present invention.

Prior art systems for fabricating battery plate envelopes often utilize adhesives to seal the edges of the envelope. The following patents typify prior art efforts which utilize adhesives: U.S. Patent No. 2,271,223 to Sudo; U.S. Patent No. 3,900,341 to Shoichiro et al; U.S. Patent No. 4,080,727 to Stolle et al; U.S. Patent No. 4,125,425 to Vecchiotti et al; and U.S. Patent No. 4,161,815 to Land et al. The systems for sealing the edges of the envelopes described in these patents exhibit many deficiencies. They are slow because of the substantial dwell time required while the adhesive sets. They can result in degradation of the envelope material, particularly where solvent adhesive is used, such as in the Vecchiotti patent. They are complicated since they inherently require some means for precisely distributing the correct amount of adhesive along the edges of the envelope. For example, the Stolle patent provides complicated means for lifting the edges of the envelope to deposit a bead of adhesive thereon. Finally, because thermosetting resins are often used (see Shoichiro), the envelope must often be heated so that the resin will cure and set.

Because of these difficulties with the use of adhesives, others have preferred to use heat to seam the side edges of the envelope. A typical heat seaming system is disclosed in U.S. Patent No. 2,570,677 to Honey et al. There are also many drawbacks with heat sealing systems. First, such systems are inherently expensive to operate due to the substantial consumption of energy. Second, they are slow because of the time required to heat the material. Third, they can result in degradation of the material even if precisely the right amount of heat is applied. Fourth, they require precise control of the heat application process in order to ensure a proper seal without destroying the material.

In order to overcome some of the drawbacks with earlier heat sealing systems, modern envelope fabrication systems often make use of ultrasonic waves to generate heat from the friction between the facing folds of sheet material. One such system is disclosed in U.S. Patent No. 4,026,000 to Anderson. This system is somewhat faster than earlier designs because, as noted above, heat emanates from friction between the facing envelope sheets, rather than from an external source which requires that the heat pass entirely through both layers of sheet. However, like the earlier designs, the amount of heat to be generated must be precisely measured to prevent sheet degradation. Also, the ultrasonic generators typically increase the initial cost of the system.

Hence, it is a primary object of the present invention to provide an improved envelope fabrication system which effectively and reliably overcomes the aforementioned drawbacks and limitations of the prior art proposals. More specifically, the present invention has as its objects, one or more of the following, taken individually or in combination:

(1) The provision of a method for fabricating envelopes for battery plates which is less expensive initially and which may be operated at reduced costs due to utilization of a minimum of energy during normal operation;

(2) To develop an apparatus for sealing battery plate envelopes which operates at a higher speed than conventional machines and is adaptable to mass production techniques in battery manufacture;

(3) To provide an apparatus for fabricating battery plate envelopes which do not inherently result in degradation of the envelope material during the sealing process;

(4) The provision of an envelope fabricator which is simpler and therefore less costly and more reliable than conventional machines;

(5) To provide a method and apparatus for fabricating battery plate envelopes which take advantage of the properties of the microporous material which is being utilized in the envelope.

In response to the problems present in the prior art the present invention provides a method for sealing facing surfaces of microporous battery plate insulation material in the fabrication of battery plate envelopes wherein said method comprises the steps of: (a) pushing a battery plate

edgewise into the material to fold the material over the plate and provide facing surfaces thereof; (b) feeding the battery plate and folded material edgewise toward a pair of sealing surfaces, at least one of which includes a pair of axially spaced, rotatably mounted sealing wheels, the other sealing surface acting as an anvil against which the sealing wheels are adapted to be pressed; and (c) sealing at least two edges of the facing surfaces by compressing the edges into one another between said sealing surfaces, the compressive force being within the range of plastic flow of the material at ambient temperatures thereby enabling said sealing to take place solely by applying said compressive force without use of heat sealing means.

The invention also provides in accordance with an alternative definition a method for fabricating battery plate envelopes from a sheet formed of microporous plastic material having a width greater than that of a battery plate to be enveloped, comprising: (a) inserting a battery plate into the sheet to fold the sheet about the battery plate, with edges overlapping it on both sides; (b) feeding the battery plate and folded sheet toward a first and second sealing surface, said first sealing surface comprising a pair of axially spaced, rotatably mounted, first sealing wheels; and (c) sealing the overlapping edges of the sheet by compressing the edges into one another between the first sealing wheels and the second sealing surfaces, the compressive force being within the range of plastic flow of the material at ambient temperatures thereby enabling said sealing to take place solely by applying said compressive force without use of heat sealing means.

The sealing is normally performed by forming a multiplicity of aligned, evenly spaced, mating indentations and projections in the facing edges of the sheet through the use of axially extending, evenly spaced gear teeth on the peripheral faces of the sealing wheels.

The invention also provides an apparatus for fabricating a battery plate envelope from a sheet of microporous polyolefin having a width greater than that of the battery plate to be enveloped, wherein the apparatus comprises: (a) means for feeding the sheet into the apparatus; (b) a sizing section receiving the sheet from said feeding means, said sizing section comprising means for cutting the sheet into lengths which approximate twice the height of the battery plate, and creasing means for forming a fold line across the sheet, perpendicular to the length thereof and approximately bisecting the cut sheet; (c) stop means receiving the cut sheet from said sizing section, for stopping the sheet and positioning it for folding; (d) battery plate feed means for individually feeding battery plates edgewise into the sheet adjacent the fold line thereof; (e) means for folding the sheet about the battery plates with edges overlapping the battery plate on .both sides; and (f) means for receiving the folded sheet with the battery plate therein and for compressing and crimping the sheet edges into one another to form an envelope about the battery plate; the compressive force being within the range of the plastic flow of the material at ambient temperatures.

Preferably the means for receiving and compressing the sheet edges comprises: (a) a pair of rotatably mounted pressure rollers having parallel axes, each of said rollers including two sealing gears which are axially spaced on each of said rollers by a distance greater than the width of the battery plate but less than that of the sheet, each of said sealing gears being in engaging relation with one of the sealing gears mounted to the other of said pressure rollers, each of said rollers also including a sleeve disposed coaxially and between its said sealing gears, each of said sleeves being radially aligned with and having a periphery in proximity to that of the sleeve mounted to the other of said rollers, thereby defining a sleeve interface which receives the mid-portion of the sheet which is enveloping the battery plate; (b) means for adjustably forcing said rollers toward one another so that the degree of compression is regulable; and (c) means for rotatably driving said rollers.

By way of example, the manner of carrying out the invention will be further described with reference to the accompanying drawings in which:

Figure 1 is an end elevation view of one embodiment of the present invention;

Figure 2 is a sectional view taken along line 2—2 of Figure 1;

Figure 3 is a sectional view taken along line 3—3 of Figure 1;

Figure 4 is a fragmentary side elevation view showing a battery plate being pushed against the fold line of a cut sheet for engagement by the sealing gears;

Figure 5 shows a battery plate envelope formed by the embodiment of Figure 1, including a battery plate positioned therein; and

Figure 6 is a close-up fragmentary side elevation view depicting the sealing gears.

In that form of the invention chosen for purposes of illustration in the figures, an apparatus for fabricating battery envelopes is generally indicated with the numeral 10. The apparatus 10 includes a sheet feed section 12, a sizing section 14, a battery plate feed section 16, and a sealing section 18. The sheet feed, sizing, and sealing section 12, 14, and 18, respectively, are typically mounted in vertical alignment, with battery plate feed section 16 mounted behind and in horizontal alignment with sealing section 18. This arrangement permits sufficient space for the stacking of a large number of battery plates 20 above battery plate feed section 16 in order to permit the apparatus 10 to operate for a substantial period of time without requiring the attention of an operator. The drawings do not depict means for storing the sheet material, which typically include a sheet storage roller having tension means thereon so that the sheet 22 is under slight tension as it is pulled into the apparatus 10 by sheet feed section 13.

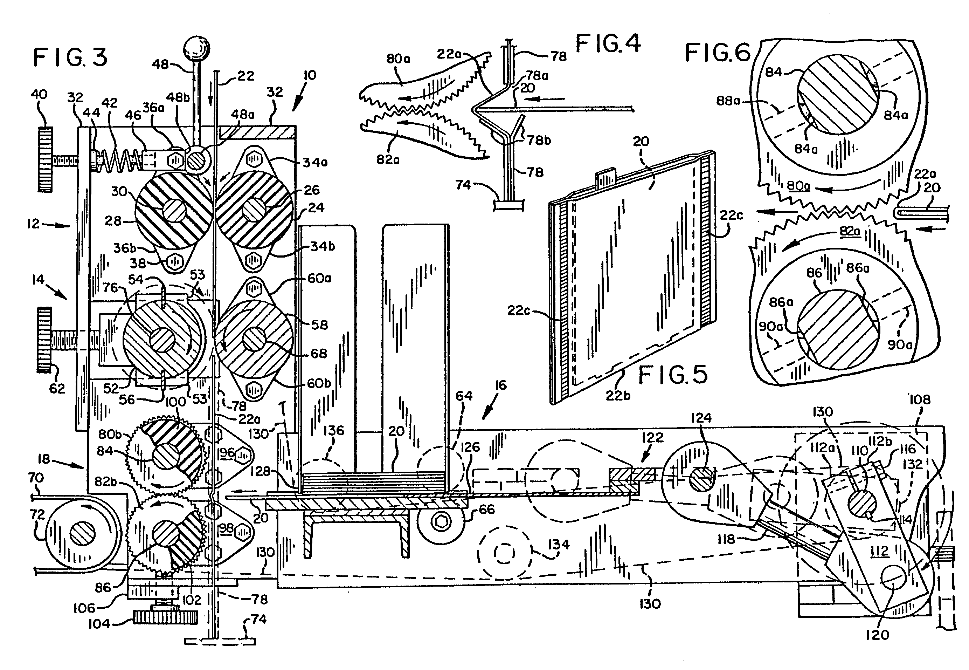

Sheet feed section 12 includes two parallel feed rollers which are adapted to receive the sheet 22 and direct it downwardly to sizing section 14. The right hand roller (as shown in Figure 3) is designated the feed driver roller 24 and is driven with its shaft 26 in bearings (not shown) by appropriate drive means (to be described in detail below). The other feed roller serves as an idler, and is therefore designated as the feed idler roller 28. It is mounted to a shaft 30 which is rotatably mounted by bearings 31 to an apparatus casing 32. Feed drive roller shaft 26 is rotatably mounted to casing 32 by upper and lower feed drive mounting flanges 34a and b. Feed idler roller shaft 30 is also mounted in upper and lower flanges 36a and b, but the feed idler mounting flanges permit the axis of rotation of feed idler roller 28 to be rotationally displaced with respect to casing 32 about point 38 to which lower feed idler mounting flange 36b is mounted. This simplifies start up operations, and permits regulation of the pressure exerted by the feed rollers on the sheet 22.

A pair of feed roller control wheels 40 extend outside of casing 32 to permit the operator to vary the amount of pressure exerted on the sheet 22 by the feed rollers. Each of the feed roller control wheels 40 acts through a feed pressure spring 42 which, through spring seats 44 and 46, transfers pressure from feed roller control wheel 40 to upper feed idler mounting flanges 36a. Thus, when feed roller control wheels 40 are turned in an clockwise direction, the pressure exerted by feed pressure springs 42 on upper feed idler mounting flanges 36a increases, thereby increasing the pressure exerted by feed idler roller 28 on the sheet 22.

A pressure relief lever 48 is normally included to permit feed idler roller 28 to be temporarily displaced away from feed drive roller 24 in order to permit the sheet 22 to be inserted into the apparatus 10. Pressure relief lever 44 is normally pivotally mounted to casing 32 at its lower end, which includes a flattening camming surface 48b, and a bar 48a which extends across the width of the machine and terminates in a second, aligned camming surface (not shown). Thus, displacement of the upper end 48c of pressure relief lever 48 results in displacement of upper feed idler mounting flanges 34a at each side of the apparatus 10.

The sheet 22 typically includes a flat side and a side having evenly spaced raised ribs (not shown). These ribs are included to maintain most of the surface area of the sheet 22 a slight distance away from the battery plate 20. It has been found that this enhances acid and ion migration in and out of the envelope formed by the sheet 22. In order to minimize the possibility of distortion or other damage to the ribs, one of the feed rollers normally includes a resilient cover. In the depicted embodiment, feed drive roller 24 is constructed entirely of rubber so that sheet feed section 12 is adapted to receive sheet 22 with the ribbed side being disposed toward feed drive roller 24. Thus, even if the pressure being exerted by feed idler roller 28 upon feed drive roller 24 is substantial, the ribs on sheet 22 will not be damaged.

As noted above, sizing section 14 is positioned immediately below sheet feed section 12. The central component of sizing section 14 is a sizing cylinder 52 which is mounted on a shaft 76 which, in turn, is rotatably mounted in bearings 53. Sizing cylinder 52 includes a pair of oppositely disposed, axially aligned, and outwardly extending blades. The larger of these blades is designated the cutting blade 54 since it is adapted to cut the sheet 22 to form the appropriate length for fabrication of the envelopes. The other blade is designated the creasing blade 56. It is adapted to merely form a crease in the sheet 22 in order to provide a fold line for subsequent folding of the sheet. As depicted, cutting blade 54 normally has a sharpened edge while that of creasing blade 56 is blunt or rounded. Cutting blade 54 extends slightly further than creasing blade 56 so that it completely cuts through the sheet 22. Creasing blade 56, on the other hand, extends only as far as necessary to flatten or crimp the ribs of the sheet 22 against platen roller 58. Both the cutting and creasing blades 54 and 56 cooperate with platen roller 58 which provides a solid surface against which they are adapted to operate. Platen shaft 68, to which platen roller 58 is mounted, is also rotatably mounted to casing 32 by upper and lower platen roller mounting 60a and b. Platen roller 58 normally includes a chromium sheath (not shown) or a similar hard material to minimize damage to platen roller 58 during the cutting and creasing operations. Sizing cylinder 52 and platen roller 58 are driven by appropriate drive means, which will be described in detail below.

To permit the position of cutting blade 54 and creasing blade 56 to be precisely controlled with respect to platen roller 58, a pair of sizing cylinder control wheels 62 are included. One of these wheels is mounted adjacent each end of sizing cylinder shaft 76, and extends inwardly to contact one of a pair of sizing cylinder shaft bearings 53. Sizing cylinder shaft 76 is rotatably mounted to casing 32 to permit sizing cylinder shaft bearings 53, and sizing cylinder 52 carried thereby, to be displaced toward and away from platen roller 58. Thus, by turning sizing cylinder control wheels 62, the position of cutting blade 54 and creasing blade 56 with respect to platen roller 58 may be precisely controlled.

Sealing section 18 of the apparatus 10, which is positioned immediately below sizing section 14, includes a pair of vertically extending, aligned sheet guide plates 78, shown in phantom in Figure 3, with a stop member 74 positioned therebelow. Sheet guide plates 78 are spaced to provide a channel for receiving the cut sheet 22a. They include a centrally disposed, horizontal slot 78a which, as shown in Figure 4, is adapted to receive the battery plate 20 from battery feed section 16. Sheet guide plates 78 may be flared adjacent slot 78a to facilitate withdrawal of the cut sheet 22a therefrom. In the embodiment depicted in Figure 4 only the lower plates are flared, at 78b, to minimize the effect of gravity on the cut sheet. The described sheet guide plates and stop member are sometimes referred to herein cumulatively as the stop means.

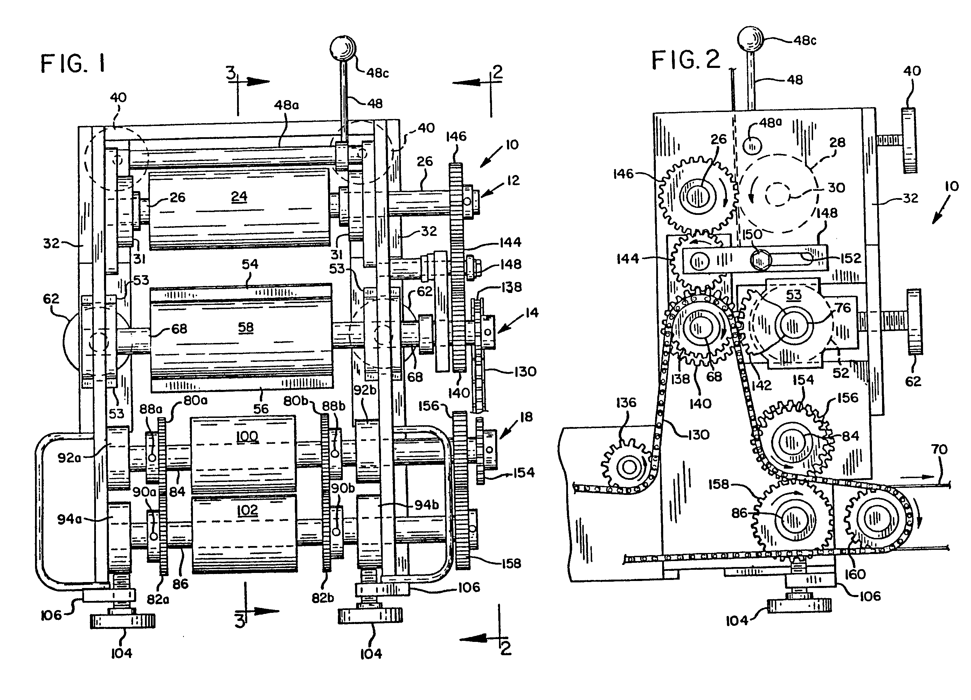

As shown in Figure 1, axially spaced sealing gears 80a and b and 82a and b are mounted to sealing shafts 84 and 86, respectively, by set screws 88a and b and 90a and b, respectively. Sealing shafts 84 and 86 are provided with flats 84a and 86a to facilitate the use of set screws. Bearings 92a and b and 94a and b rotatably mount each of the sealing shafts 84 and 86 to casing 32 via sealing shaft mounting flanges 96 and 98. Sleeves 100 and 102 are mounted to each of the sealing shafts 84 and 86 midway between sealing gears 80a and b or 82a and b, as shown in Figure 1. These sleeves 100 and 102 are normally formed of resilient material, such as a rubberized compound, to adapt the sleeves to receive the central portion of the cut sheet 22a which envelops the battery plate 20 to assist in conveying the sheet and plate through the sealing section 18.

A pair of compression control wheels 104, which are rotatably mounted to casing 32 by flanges 105, permit lower sealing shaft 86, sealing gears 82a and b and sleeve 102 to be displaced slightly toward corresponding components mounted to sealing shaft 84. As will be explained in detail below, this increases the degree of compression exerted on the cut sheet 22a by sealing gears 80a and b and 82a and b. In order to accommodate such movements, sealing shaft 86 is mounted to casing 32 to provide a certain amount of sliding movement.

A belt-like conveyor 70, driven by a conveyor drive, roller 72, is provided immediately downstream of sealing section 18 to convey the now sealed envelope 22b from the sealing section.

The battery plate feed section 16 of apparatus 10 will now be described. Since it is of conventional design, however, it will not be given extensive treatment herein. The battery plate feed section 16 includes a block 108 to which a drive shaft 110 is rotatably mounted. A motor (not shown) is drivingly connected to drive shaft 110. A connecting arm 112 is fixed about drive shaft 110 by a key 114 and a mounting bolt 116. Connecting arm 112 is split adjacent drive shaft 110, so that mounting bolt 116 rigidly holds the two halves 112a and b together. Connecting arm 112 is rotatably mounted to a connecting rod 118 by a connecting bearing 120. The opposite end of connecting rod 118 is mounted to a slide assembly 122 by a slide bearing 124. The slide assembly 122 includes a slide plate 126 which is adapted to individually feed battery plates 20 into sealing section 18 of the apparatus 10. Slide assembly 122 also includes upper and lower slide plate rollers 64 and 66 which slidingly engage slide plate 126. A gate 128 is disposed immediately between the stack of battery plates 20 and sealing section 18. This gate 128 is positioned in proximity to slide plate 126 with a clearance which is only slightly greater than the thickness of a battery plate 20. Therefore, as drive shaft 110 is rotated, slide plate 126 reciprocates toward and away from sealing section 18 to consecutively feed individual battery plates 20 into sealing section 18.

The mechanism for driving the components of apparatus 10 will now be described. Primary reference should be made to Figure 2 for this discussion, but some of the components are shown in phantom in Figure 3, and most of the drive gears are depicted in Figure 1. An endless drive chain 130 extends from a sprocket 132 mounted coaxially with drive shaft 110. Chain 130 is directed through battery feed section 16 by guide sprockets 134 and 136.

As shown in Figure 2, a platen roller sprocket 138 is mounted to one end of platen roller shaft 68. A platen roller drive gear 140 is also mounted to platen roller shaft 72 behind platen roller sprocket 138. Platen roller drive gear 140 engages a sizing cylinder drive gear 142 mounted to sizing cylinder shaft 76. Platen roller drive gear 140 also engages an idler gear 144 which, in turn, engages a replaceable feed drive roller drive gear 146 which is mounted to feed drive roller shaft 26. Idler gear 144 is rotatably mounted to a mounting bolt 150. Mounting plate 148 includes a slot 152 so that by loosening mounting bolt 150, idler gear 144 can be moved out of engagement with feed drive roller drive gear 146 so that gear 146 can be replaced with a larger or smaller gear. This will change the relative speed of rotation between sizing cylinder 52 and feed rollers 24 and 28. Thus, a longer or shorter sheet will be cut by sizing section 18 depending upon whether the new feed roller drive gear is smaller or larger than the original gear. In any event, it is normal that sizing cylinder 52 rotates at a speed such that during cutting operations, a slight downward tension will be exerted on sheet 22 by cutting blade 54 so that even if sheet 22 is not completely cut, the downward pulling of the cutting blade will tear the sheet 22 along the desired line.

From the platen roller sprocket 138, drive chain 130 passes downwardly across a sealing shaft sprocket 154 which is mounted to one end of upper sealing shaft 84. Sealing shaft drive gears 156 and 158 are mounted to upper and lower sealing shafts 84 and 86, respectively, so that this drive is transmitted to lower sealing shaft 86.

The gear teeth of platen roller drive gear 140, sizing cylinder driven gear 142, and sealing shaft drive gears 156 and 158 are all shaped to permit a certain amount of movement between those components which have hereinabove been described as being relatively displaceable.

From sealing shaft sprocket 154, drive chain 130 passes around a conveyor sprocket 160 which, through conveyor drive roller 72, operates conveyor 70.

Operation

The operation of the apparatus 10 will now be described. Before starting the apparatus a sufficient supply of microporous sheet 22 should be provided, on a sheet supply roller (not shown) positioned adjacent the apparatus. A sufficient number of battery plates should also be positioned in battery plate feed section 16. The proper compression setting is made through the use of compression control wheels 104. An appropriately sized feed drive roller drive gear 146 should be installed to correspond to the height of the battery plate to be enveloped. In order to change gear 146, bolt 150 is loosened, and idler gear 144 is slid outwardly on its mounting plate 148, thereby disengaging idler gear 144 and feed drive roller drive gear 146. Once gear 146 is replaced, mounting plate 148 is returned to its original position and bolt 150 is tightened.

The microporous sheet 22 may then be threaded into apparatus 10 adjacent the interface of feed drive roller 24 and feed idler roller 28 by pivoting the upper end 48a of pressure relief lever 48. The camming face 48b displaces feed pressure spring seat 46 to the left (Figure 3), slightly rotating the axis of feed idler roller 28 about pivot point 38. This provides a spacing between feed drive roller 24 and feed idler roller 28 into which the sheet 22 may be inserted. Pressure relief lever 48 is then released, and feed pressure springs 42 return feed idler roller 28 to its original position, now exerting a pinching pressure on sheet 22.

The drive motor is then activated, thus causing drive shaft 110 to rotate. Drive chain 130 causes feed drive roller 24 to rotate in a counter-clockwise direction (in Figure 3), thus feeding sheet 22 downwardly toward sizing section 14. The downward movement of sheet 22 also causes the feed idler roller 28 to rotate. Feed pressure springs 42 maintain a constant pressure on sheet 22 as it is fed through the feed rollers.

As the sheet 22 is fed downwardly into sizing section 14, sizing cylinder 52 and platen roller 58 are rotating at a somewhat greater speed than the feed rollers. By the time a length of sheet which is approximately equal to the height of the battery plate 20 has passed the sizing cylinder 52, creasing blade 56 begins to contact the sheet 22 and crimps it against platen roller 58. This flattens the ribs along a line which becomes the fold line for the envelope. As sizing cylinder 52 continues to rotate a second length of sheet 22 which is also approximately equal to the height of the battery plate, passes through sizing section 14 until cutting blade 54 comes into contact with sheet 22, thus cutting sheet 22 against platen roller 58. In the event the cut is not complete, the fact that sizing cylinder 52 is rotated at a higher rate of speed than the feed rollers means that the sheet will be pulled or torn along the cut line.

The cut sheet 22a drops downwardly by gravity from sizing section 14 into sheet guide 78 of sealing section 18. When the cut sheet 22a contacts stop member 74, it is ready for insertion of the battery plate 20.

By the time the cut sheet 22a reaches the position depicted in Figure 3, connecting rod 118 and slide plate 126 will also be in the position depicted in Figure 3, and insertion of a battery plate 20 edgewise into the folded line of the cut sheet 22a will begin. Gate 128 prevents more than one battery plate 20 from being inserted into any one cut sheet. Figure 4 depicts a battery plate 20 as it is moved into contact with the cut sheet 22a. It can be seen that the battery plate 20 pulls the cut sheet 22a from sheet guide 78. The flange portion 78b on sheet guide 28 tends to encourage even feed of the cut sheet into sealing section 18, and reduces the effects of gravity on the cut sheet 22a.

Once the cut sheet 22a with the battery plate 20 is pushed as far as the interface of sealing gears 80a and b and 82a and b and sleeves 100 and 102, the sheet will be grasped and fed through the sealing section 18. Thus, the sealing gears engage and compress the adjacent folds of the cut sheet 22a into each other to form continuous crimps 22c along each side of the battery plate 20. Sleeves 100 and 102 flatten the envelope, thereby preventing any misalignment or distortion of the folds of the envelope 22b which might occur if the mid-portion of the cut sheet was permitted to fall away from the battery plate. Since sleeves 100 and 102 are normally resilient, they will not damage the battery plate 20 as it is fed through sealing section 18. Once the enveloped battery plate passes out of sealing section 18, it is immediately carried away by conveyor 105.

The present invention thus seals the two folds of cut sheet 22a to each other through the use of compression, without requiring the utilization of heat or adhesives. As presently understood, it is believed that the application of substantial compression to the two folds of cut sheet 22a results in collapse of the micropores within the plastic material being used. The term "plastic" as used herein means a material which, when subjected to compression at ambient temperatures, will flow before it will crack or break. Normally, the separator material is composed of very high molecular weight polyolefin, with an inert filler and oil, although other plastic material may alternatively be used (see U.S. Patent No. 3,351,495 for a discussion of other suitable materials). Before collapse of the micropores is complete, a substantial amount of material from the adjacent fold apparently passes or flows into the micropores of the adjacent sheet. Thus, once compression is completed, the two sheets are integrally sealed into one another.

The amount of compression which is utilized in the present invention will vary depending upon the materials which are utilized. However, the compression must generally be greater than the yield strength of the sheet and must be within the range of plastic flow; that is, the compression must at least equal the force which results in compression of the micropores. A compression of from 6,000 to 10,000 psi (41379 to 68966 kPa) is normally within this range, but other less or greater pressures may be used.

As pressure is applied to the folds of the cut sheet 22a, the thickness of the plastic material becomes reduced. Because of this flattening effect, the surface area of the compressed portion of this sheet tends to expand. The teeth of sealing gears 80a and b and 82a and b take advantage of this increased surface area to form a series of interlocking indentations and projections, thereby compounding mechanical sealing with the sealing effect of the flow of plastic from one fold into the micropores of the adjacent fold.

The depicted embodiment includes 90° gear teeth, that is, gear teeth with contained angles of 90°. While not accurately depicted in the drawings, the preferred arrangement is to include 15 teeth for each inch (2.54 cm) of sealing gear periphery, with a sealing gear diameter of three inches (7.62 cm). However, different gear tooth configurations may be desirable under certain circumstances. In any event, the mating indentations and projections should be positioned and sized such that the clearance between the opposed, compressing surface be a constant across the entire width of the sheet. The configuration and sizing of the teeth on the depicted sealing wheels are such that the clearance is equal across several of the adjacent teeth (see Figures 4 and 6). This maintains the compression for a longer period, and is another reason why the depicted embodiment is the preferred one. Nonetheless, it should be appreciated that any type of face configuration including mating indentations and projections may be utilized. In fact, the invention has been found to successfully operate even without the presence of such indentations and projections; that is, when two flat sealing wheels (not shown) are utilized, a seal may often be effected due to the flow from one fold of the sheet into the other. This is not the preferred arrangement, however, since this aspect of the invention does not take advantage of the increased surface area caused by the compression.

Also, it should be appreciated that it may be possible in certain instances to substitute other sealing means which can create sufficient compression for sealing. Such other means might include a pivotable clamp. However, it is believed that the depicted arrangement is more suitable for automation since it provides for continuous fabrication of battery plate envelopes and simultaneous insertion of battery plates into such envelopes at a rate of speed which exceeds that of any of the prior art designs.

## Claims

1. A method for sealing facing surfaces of microporous battery plate insulation material in the fabrication of battery plate envelopes, comprising

(a) pushing a battery plate edgewise into the material to fold the material over the plate and provide facing surfaces thereof;

(b) feeding the battery plate and folded material edgewise toward a pair of sealing surfaces, at least one of which includes a pair of axially spaced, rotatably mounted sealing wheels, the other sealing surface acting as an anvil against which the sealing wheels are adapted to be pressed; and

(c) sealing at least two edges of the facing surfaces by compressing the edges into one another between said sealing surfaces, the compressive force being within the range of plastic flow of the material at ambient temperatures thereby enabling said sealing to take place solely by applying said compressive force without use of heat sealing means.

2. A battery including a plurality of battery plate envelopes formed by the method of Claim 1.

3. A method for fabricating battery plate envelopes from a sheet formed of microporous plastic material having a width greater than that of a battery plate to be enveloped, comprising:

(a) inserting a battery plate into the sheet to fold the sheet about the battery plate, with edges overlapping it on both sides;

(b) feeding the battery plate and folded sheet toward a first and second sealing surface, said first sealing surface comprising a pair of axially spaced, rotatably mounted, first sealing wheels; and

(c) sealing the overlapping edges of the sheet by compressing the edges into one another between the first sealing wheels and the second sealing surface, the compressive force being within the range of plastic flow of the material at ambient temperatures thereby enabling said sealing to take place solely by applying said compressive force without use of heat sealing means.

4. The method of Claim 3 wherein said microporous material is plastic.

5. The method of Claim 3 or 4 wherein said second sealing surface comprises a pair of second sealing wheels which are opposed from said first sealing wheels.

6. The method as claimed in any of Claims 3 to 5, wherein the steps of sealing the overlapping edges includes forming mating indentations and projections in the facing edges of the sheet through the use of mating indentations and projections on the peripheral faces of the first sealing wheels and on the second sealing surface.

7. The method of Claim 6 wherein the step of forming a mating indentation comprises forming a multiplicity of aligned, evenly spaced, mating indentations and projections in the facing edges of the sheet through the use of axially extending, evenly spaced gear teeth.

8. The method as claimed in any of Claims 3 to 7 wherein the folded sheet together with said battery plate is fed toward the sealing surfaces by extending the folding means toward the sealing surfaces at least until the sheet is engaged by the surfaces.

9. The method as claimed in any of Claims 3 to 8, further comprising forming a fold line across the sheet, perpendicular to the length of the sheet, and wherein the battery plate is pushed into the sheet at the fold line.

10. The method of Claim 9 further comprising cutting the sheet to a length which approximates double the height of the battery plate to be enveloped, and wherein the fold line is placed proximate the mid-point of the length of the cut sheet.

11. The method of Claim 10 wherein the cutting comprises a rotary cutting process in which the sheet is pulled in tension along its length so that in the event the cut is not complete, the sheet will be torn along the cut line formed during the cutting.

12. The method as claimed in any of Claims 3 to 11, wherein the compression exerted on the edges of the sheet exceeds the yield strength of the sheet.

13. The method as claimed in any of Claims 3 to 11, where the compression exerted on the edges of the sheet is at least 6,000 psi (41379 kPa).

14. An apparatus for fabricating a battery plate envelope from a sheet of microporous polyolefin having a width greater than that of the battery plate to be enveloped, wherein the apparatus comprises:

(a) means for feeding the sheet into the apparatus;

(b) a sizing section receiving the sheet from said feeding means, said sizing section comprising means for cutting the sheet into lengths which approximate twice the height of the battery plate, and creasing means for forming a fold line across the sheet, perpendicular to the length thereof and approximately bisecting the cut sheet;

(c) stop means receiving the cut sheet from said sizing section, for stopping the sheet and positioning it for folding;

(d) battery plate feed means for individually feeding battery plates edgewise into the sheet adjacent the fold line thereof;

(e) means for folding the sheet about the battery plates with edges overlapping the battery plate on both sides; and

(f) means for receiving the folded sheet with the battery plate therein and for compressing and crimping the sheet edges into one another to form an envelope about the battery plate; the compressive force being within the range of the plastic flow of the material at ambient temperatures.

15. The apparatus of Claim 14 wherein said means for receiving and compressing the sheet edges comprises:

(a) a pair of rotatably mounted pressure rollers having parallel axes, each of said rollers including two sealing gears which are axially spaced on each of said rollers by a distance greater than the width of the battery plate but less than that of the sheet, each of said sealing gears being in engaging relation with one of the sealing gears mounted to the other of said pressure rollers, each of said rollers also including a sleeve disposed co-axially and between its said sealing gears, each of said sleeves being radially aligned with and having a periphery in proximity to that of the sleeve mounted to the other of said rollers, thereby defining a sleeve interface which receives the mid-portion of the sheet which is enveloping the battery plate;

(b) means for adjustably forcing said rollers toward one another so that the degree of compression is regulable; and

(c) means for rotatably driving said rollers.

16. The apparatus of Claim 15 wherein each of the sealing gears includes a multiplicity of axially aligned 90° gear teeth.

17. The apparatus claimed in any of Claims 14 to 16 wherein said cutting means and creasing means comprise:

(a) a substantially cylindrical, rotatably mounted sizing cylinder having a creasing blade and a cutting blade, said blades mounted to the periphery of said sizing cylinder and extending axially along opposite sides thereof; and

(b) a platen roller rotatably mounted with its axle parallel to that of said sizing cylinder positioned so that said cutting blade contacts said platen roller to cut the sheet, and said creasing blade crimps the sheet against said platen roller to form a line for subsequent folding.

## Patentansprüche

1. Verfahren zum Verbindung von sich gegenüberliegenden Bahnen aus einem mikroporösem Isoliermaterial für Batterie-Platten bei der Herstellung von Taschen für Batterie-Platten, bei dem man

(a) eine Batterie-Platte mit einem Rand in das Isoliermaterial einschiebt, um dieses um die Platte herumzufalten und sich gegenüberliegende Isoliermaterialflächen zu erhalten,

(b) die Batterie-Platte mit dem darum herumgefalteten Isoliermaterial mit einem Rand in Richtung auf ein Paar Verbindungsflächen bewegt, von denen mindestens eine ein Paar seitlich im Abstand voneinander liegende, drehbar gelagerte Verbindungsräder umfaßt, während die andere Verbindungsfläche als ein Amboß wirksam ist, gegen den die Verbindungsräder andrückbar sind, und

(c) mindestens zwei Randstreifen der sich gegenüberliegenden Isoliermaterialflächen miteinander verbindet, indem man die Randstreifen zwischen den Verbindungsflächen ineinander drückt, wobei die Druckkraft innerhalb des Bereiches des plastischen Fließens des Isoliermateriales bei Umgebungstemperaturen liegt, derart, daß die Verbindung allein durch Aufbringen der Druckkraft ohne Anwendung von Heißverklebungsmitteln stattfindet.

2. Batterie, die mehrere nach dem Verfahren von Anspruch 1 hergestellte Taschen für Batterie-Platten aufweist.

3. Verfahren zur Herstellung von Taschen für Batterie-Platten aus einer aus mikroporösem plastischen Material bestehenden Bahn, deren Breite größer ist als die Breite der aufzunehmenden Batterie-Platte, bei dem man

(a) eine Batterie-Platte in die Bahn einschiebt, um die Bahn um die Batterie-Platte herumzufalten, wobei an beiden Seiten sich überlappende Randstreifen entstehen,

(b) die Batterie-Platte und die darum herum gefaltete Bahn in Richtung auf erste und zweite Verbindungsflächen bewegt, von denen die erste Verbindungsfläche ein Paar axial im Abstand voneinander liegende, drehbar gelagerte erste Verbindungsräder umfaßt, und

(c) die sich überlappenden Randstreifen der Bahn miteinander verbindet, indem man die Randstreifen zwischen den ersten Verbindungsrädern und der zweiten Verbindungsfläche ineinander drückt, wobei die Druckkraft innerhalb des Bereiches des plastischen Fließens des Bahnmateriales bei Umgebungstemperaturen liegt, derart, daß die Verbindung allein durch Aufbringen der Druckkraft ohne Anwendung von Heißverklebungsmitteln stattfindet.

4. Verfahren nach Anspruch 3, bei dem das mikroporöse Material Kunststoff ist.

5. Verfahren nach Anspruch 3 oder 4, bei dem die zweite Verbindungsfläche ein Paar von zweiten Verbindungsrädern umfaßt, die den ersten Verbindungsrädern gegenüberliegen.

6. Verfahren nach einem der Ansprüche 3 bis 5, bei dem die Schritte des Verbindens der sich überlappenden Randstreifen das Anbringens von ineinandergreifenden Eindrücken und Vorsprüngen in den sich gegenüberliegenden Randstreifen der Bahn durch die Verwendung von ineinanderpassenden Vertiefungen und Vorsprüngen auf den Umgangsflächen der ersten Verbindungsräder und auf der zweiten Verbindungsfläche umfaßt.

7. Verfahren nach Anspruch 6, bei dem der Schritt des Anbringens einer zusammenpassenden Verzahnung das Herstellen einer Vielzahl von in einer Reihe im Gleichmäßigen Abstand voneinander liegenden, zusammenpassenden Eindrücken und Vorsprüngen in den sich gegenüberliegenden Randstreifen der Bahn durch die Anwendung von sich axial erstreckenden, im gleichmäßigen Abstand voneinander liegenden Zahnradzähnen umfaßt.

8. Verfahren nach einem der Ansprüche 3 bis 7, bei dem die gefaltete Bahn zusammen mit der Batterie-Platte in Richtung auf die Verbindungsflächen derart bewegt, daß die Falteinrichtungen soweit bis zu den Verbindungsflächen wirksam sind, bis die Bahn mindestens von den Verbindungsflächen ergriffen wird.

9. Verfahren nach einem der Ansprüche 3 bis 8, welches weiterhin darin besteht, daß man eine Faltlinie quer zur Bahn senkrecht zur Bahnlänge anbringt, wobei die Batterie-Platte im Bereich dieser Faltlinie in die Bahn eingeschoben wird.

10. Verfahren nach Anspruch 9, welches weiterhin darin besteht, daß man die Bahn auf eine Länge zuschneidet, welche angenähert der doppelten Höhe der zu verpackenden Batterie-Platte entspricht, wobei die Faltlinie, bezogen auf die Länge des abgeschnittenen Bahnstückes, sich in der Mitte befindet.

11. Verfahren nach Anspruch 10, bei dem das Ablängen von der Bahn einen Drehschneideprozeß umfaßt, bei dem die Bahn entlang ihrer Länge durch Ziehen unter Spannung gesetzt wird, so daß sie für den Fall eines nicht vollständigen Schnittes entlang der durch das Schneiden entstandenen Schneidlinie zerrissen wird.

12. Verfahren nach einem der Ansprüche 3 bis 11, bei dem der auf die Randstreifen der Bahn ausgeübte Druck die Streckgrenze der Bahn übersteigt.

13. Verfahren nach einem der Ansprüche 3 bis 11, bei dem der auf die Randstreifen der Bahn ausgeübte Druck mindestens 413,79 kg/cm$^2$ (41379 kPa) beträgt.

14. Vorrichtung zur Herstellung einer Tasche für eine Batterie-Platte aus einer aus einem mikroporösem Polyolefin bestehenden Bahn, deren Breite größer ist als die Breite der aufzunehmenden Batterie-Platte, enthaltend

(a) eine Einrichtung zum Zuführen der Bahn in die Vorrichtung,

(b) eine Ablängstufe, die die Bahn von der Zuführeinrichtung empfängt und die Elemente zum Zerschneiden der Bahn in Längen umfaßt, die etwa der zweifachen Höhe der Batterie-Platte entsprechen, und Falzelemente umfaßt, um quer über die Bahn senkrecht zu deren Länge und im wesentlichen in der Mitte der abgeschnittenen Länge eine Faltlinie anzubringen,

(c) ein Anschlagorgan, das die abgeschnittene Länge von der Ablängstufe empfängt, um die abgeschnittene Länge anzuhalten und für den Faltprozeß zu positionieren,

(d) eine Batterie-Platten-Zuführeinrichtung zum einzelnen Einschieben von Batterie-Platten mit ihrem Rand in das abgeschnittene Bahnstück im Bereich von dessen Faltlinie,

(e) eine Einrichtung zum Herumfalten der Bahn um die Batterie-Platten, wobei sich an beiden Seiten der Batterie-Platte Randstreifen der Bahn überlappen, und

(f) eine Einrichtung zur Aufnahme der gefalteten Bahn mit der dazwischen liegenden Batterie-Platte und zum Zusammendrücken und Zusammenkrimpen der Bahn-Randstreifen ineinander, um eine die Batterie-Platte aufnehmende Tasche herzustellen, wobei die Druckkraft im Bereich des plastischen Fließens des Bahnmaterials bei Umgebungstemperaturen liegt.

15. Vorrichtung nach Anspruch 14, bei der die Einrichtungen zum Aufnehmen und Zusammendrücken der Bahn-Randstreifen

(a) ein Paar um parallele Achsen drehbar gelagerte Druckrollen, von denen jede Druckrolle zwei Verbindungszahnräder aufweist, die an jeder Seite der Rollen in einem axialen Abstand voneinander liegen, der größer ist als die Breite der Batterie-Platte jedoch kleiner als die Breite der Bahn, wobei jedes dieser Verbindungs-Zahnräder im Eingriff mit einem der Verbindungs-Zahnräder auf der anderen Druckrolle ist, von denen jede auch eine Hülse aufweist, die koaxial und zwischen den jeweiligen Verbindungs-Zahnrädern liegt, wobei jede dieser Hülsen radial zu der Hülse der anderen Rolle ausgerichtet ist und einen der Hülse der anderen Rollen eng benachbarten Umfangsabschnitt hat, derart, daß eine Hülsen-Grenzfläche gebildet ist, die den Mittelstreifen der um die Batterie-Platte herumgefalteten Bahn aufnimmt,

(b) eine Einrichtung zum verstellbaren Anstellen der beiden Rollen relativ zueinander, um die Druckgröße zu regulieren, und

(c) eine Einrichtung zum Drehantrieb für die Rollen, umfaßt.

16. Vorrichtung nach Anspruch 15, bei der jedes Verbindungszahnrad eine Vielzahl von axial ausgerichteten 90°-Zahnradzähnen aufweist.

17. Vorrichtung nach einem der Ansprüche 14 bis 16, bei der die Schneid- und Falzeinrichtungen

(a) einen im wesentlichen zylindrischen, drehbar gelagerten Ablängzylinder mit einem Falzmesser und einem Schneidmesser, wobei die beiden Messer am Umfang des Ablängzylinders angeordnet sind und sich axial auf gegenüberliegenden Seiten desselben erstrecken, und

(b) eine drehbar gelagerte Walze umfassen, deren Achse parallel zur Achse des Ablängzylinders liegt und derart angeordnet ist, daß das Schneidmesser gegen die Walze zum Abschneiden der Bahn zur Anlage kommt, während das Falzmesser die Bahn gegen die Walze drückt, um eine Linie zum anschließenden Falten zu bilden.

## Revendications

1. Un procédé pour sceller des surfaces en regard d'un matériau d'isolation microporeux de plaque de batterie dans la fabrication des enveloppes de plaques de batteries, comportant:

a) la poussée d'une plaque de batterie par un de ses bords dans le matériau pour plier le matériau sur la plaque et y former des surfaces en regard;

b) l'approvisionnement de la plaque de batterie et du matériau plié vers deux surfaces de scellement, au moins l'une d'elles comprenant deux roues de scellement espacées en direction axiale, montées à rotation, l'autre surface de scellement agissant comme une enclume contre laquelle les roues de scellement sont agencées pour être poussées; et

c) le scellement d'au moins deux bords des surfaces en regard en comprimant les bords l'un dans l'autre entre lesdites surfaces de scellement, la force de compression étant comprise dans le domaine d'écoulement plastique du matériau aux températures ambiantes, en permettant ainsi l'exécution dudit scellement simplement en appliquant ladite force de compression sans utiliser des moyens de scellement par la chaleur.

2. Une batterie comportant un série d'enveloppes de plaques de batteries formées par le procédé de la revendication 1.

3. Un procédé pour fabriquer des enveloppes de plaques de batteries à partir d'une feuille constituée de matériau plastique microporeux ayant une largeur plus grande que celle d'une plaque de batterie à envelopper, comportant:

a) l'introduction d'une plaque de batterie dans la feuille pour plier la feuille autour de la plaque de batterie, avec les bords qui la recouvrent des deux côtés;

b) l'approvisionnement de la plaque de batterie et de la feuille pliée vers une première et une seconde surfaces de scellement, ladite première surface de scellement comportant deux premières roues de scellement espacées en direction axiale, montées à rotation; et

c) le scellement des bords en recouvrement de la feuille en comprimant les bords l'un dans l'autre entre les premières roues de scellement et la seconde surface de scellement, la force de compression étant comprise dans le domaine d'écoulement plastique du matériau aux températures ambiantes, en permettant ainsi l'exécution dudit scellement simplement en appliquant ladite force de compression sans utiliser des moyens de scellement par la chaleur.

4. Le procédé selon la revendication 3, dans lequel ledit matériau microporeux est plastique.

5. Le procédé selon la revendication 3 ou la revendication 4, dans lequel ladite seconde surface de scellement comporte deux secondes roues de scellement qui sont à l'opposé desdites premières roues de scellement.

6. Le procédé selon l'une quelconque des revendications 3 à 5, dans lequel l'étape de scellement des bords en recouvrement comprend la formation de renfoncements et de saillies conjugés dans les bords en regard de la feuille en faisant usage de renfoncements et de saillies conjugués sur les surfaces périphériques des premières roues de scellement et sur la seconde surface de scellement.

7. Le procédé selon la revendication 6, dans lequel l'étape de formation de renfoncements conjugués comprend la formation d'une série de renfoncements et de saillies conjugués alignés, uniformément espacés, dans les bords en regard de la feuille en faisant usage de dents de pignons uniformément espacées, s'étendant en direction axiale.

8. Le procédé selon l'une quelconque des revendications 3 à 7, dans lequel la feuille pliée, conjointement avec ladite plaque de batterie, est alimentée vers les surfaces de scellement en étendant les moyens de pliage vers les surfaces de scellement, au moins jusqu'à ce que la feuille soit attaquée par les surfaces.

9. Le procédé selon l'une quelconque des revendications 3 à 8, comportant en outre la formation d'une ligne de pliage en travers de la feuille, perpendiculairement à la longueur de la feuille, et dans lequel la plaque de batterie est poussée dans la feuille suivant la ligne de pliage.

10. Le procédé selon la revendication 9, comportant en outre le découpage de la feuille à une longueur approximativement égale au double de la hauteur de la plaque de batterie à envelopper, et dans lequel la ligne de pliage est placée à proximité du milieu de la longueur de la feuille découpée.

11. Le procédé selon la revendication 10, dans lequel le découpage comporte une opération de découpage rotatif dans laquelle la feuille est mise en tension suivant sa longueur, de sorte qu'au cas où le découpage n'est pas complet, la feuille soit déchirée le long de la ligne de coupe formée pendant le découpage.

12. Le procédé selon l'une quelconque des revendications 3 à 11, dans lequel la compression exercée sur les bords de la feuille dépasse la limite d'élasticité de la feuille.

13. Le procédé selon l'une quelconque des revendications 3 à 11, dans lequel la compression exercée sur les bords de la feuille est au moins égale à 6000 psi (41 379 kPa).

14. Un appareil pour la fabrication d'une enveloppe de plaque de batterie à partir d'un feuille de polyoléfine microporeuse ayant une largeur plus grande que celle de la plaque de batterie à envelopper, dans lequel l'appareil comporte:

a) des moyens pour alimenter la feuille dans l'appareil;

b) une partie de calibrage recevant la feuille provenant desdits moyens d'alimentation, cette partie de calibrage comportant des moyens pour découper la feuille en longueurs approximativement égales à deux fois la hauteur de la plaque de batterie, et des moyens de pliage pour former une ligne de pliage en travers de la feuille, perpendiculairement à la longueur de celle-ci et divisant sensiblement en deux la feuille découpée;

c) des moyens d'arrêt recevant la feuille découpée à partir de ladite partie de calibrage, pour arrêter la feuille et la positionner pour le pliage;

d) des moyens d'alimentation en plaques de batterie pour alimenter individuellement les plaques de batterie par un de leurs bords dans la feuille au voisinage de la ligne de pliage de celle-ci;

e) des moyens pour plier la feuille autour des plaques de batterie avec des bords recouvrant la plaque de batterie des deux côtés; et

f) des moyens pour recevoir la feuille pliée avec la plaque de batterie à l'intérieur et pour comprimer et sertir les bords de la feuille l'un dans l'autre pour former une enveloppe autour de la plaque de batterie, la force de compression étant comprise dans le domaine d'écoulement plastique du matériau aux températures ambiantes.

15. L'appareil suivant la revendication 14, dans lequel lesdits moyens pour recevoir et comprimer les bords de la feuille comportent:

a) deux cylindres de pression montés à rotation ayant des axes parallèles, chacun desdits cylindres comportant deux pignons de scellement qui sont espacés en direction axiale sur chacun desdits cylindres d'une distance plus grande que la largeur de la plaque de batterie mais inférieure à celle de la feuille, chacun desdits pignons de scellement étant en liaison d'engrènement avec l'un des pignons de scellement monté sur l'autre cylindre de pression, chacun desdits cylindres comportant également un manchon disposé coaxialement et entre ses dits pignons de scellement, chacun desdits manchons étant aligné en direction radiale avec le manchon monté sur l'autre desdits cylindres et présentant une périphérie voisine de celle de ce manchon, en définissant ainsi un intervalle entre manchons qui reçoit la partie médiane de la feuille qui enveloppe la plaque de batterie;

b) des moyens pour pousser de façon réglable lesdits cylindres l'un vers l'autre, de sorte que le degré de compression soit réglable; et

c) des moyens pour entraîner lesdits cylindres en rotation.

16. L'appareil selon la revendication 15, dans lequel chacun des pignons de scellement comporte une série de dents d'engrenages à 90° alignées en direction axiale.

17. L'appareil selon l'une quelconque des revendications 14 à 16, dans lequel lesdits moyens de découpage et lesdits moyens de pliage comportent:

a) un cylindre de calibrage sensiblement cylindrique monté à rotation ayant une lame de pliage et une lame de découpage, ces lames étant montées à la périphérie dudit cylindre de calibrage et s'étendant en direction axiale sur des côtés opposés de celui-ci;

b) un cylindre enclume monté à rotation avec son axe parallèle à celui dudit cylindre de caligrage positionné de manière que ladite lame de découpage vienne en contact avec ledit cylindre enclume pour découper la feuille, et ladite lame de pliage applique la feuille contre ledit cylindre enclume pour former une ligne pour le pliage qui suit.

FIG. 1

FIG. 2

0 062 525

FIG.3

FIG.4

FIG.6

FIG.5

0 062 525